# EUROPÄISCHE PATENTSCHRIFT

(11) **EP 0 450 299 B1**
(45) Veröffentlichungstag und Bekanntmachung des Hinweises auf die Patenterteilung: **22.06.1994**
(21) Anmeldenummer: 91102576.5
(22) Anmeldetag: 22.02.1991
(51) Int. Cl.: B01D 46/52, B01D 39/16

(54) **Filterelement aus einem zick-zack-förmig gefalteten ring- oder plattenförmig angeordneten Filterbahnmaterial**
Filtering element with folded material in ring or flat disposition
Elément filtrant avec matériau plissé disposé en forme annulaire ou plat

(30) Priorität: 03.04.1990 DE 4010732
(43) Veröffentlichungstag der Anmeldung: 09.10.1991
(73) Patentinhaber: KNECHT FILTERWERKE GMBH, D-70376 Stuttgart (DE)
(72) Erfinder: Waibel, Hans, W-7000 Stuttgart 50 (DE); Schneider, Horst, W-7050 Waiblingen 8 (DE)
(74) Vertreter: Pfusch, Volker, Dipl.-Ing.

(56) Entgegenhaltungen:
- EP-A- 0 187 358
- BE-A- 536 408
- DE-A- 2 620 148
- FR-A- 2 075 771
- FR-A- 2 251 347
- GB-A- 1 570 385

## Beschreibung

Die Erfindung betrifft ein Filterelement nach dem Oberbegriff des Patentanspruchs 1.

Derartige Filterelemente sind beispielsweise aus EP-A-0 187 358 und FR-A-2 251 347 bekannt.

Bei dem Filterelement nach EP-A-0 187 358 besteht das platten- oder streifenförmige Dichtmaterial ausschließlich aus Kunststoff.

Das Filterelement nach FR-A-2 251 347 weist als platten- oder streifenförmiges Dichtmaterial Metallabdeckungen auf, die mit Kunststoffschichten versehen sind. Diese Kunststoffschichten werden bei Verbindung des Metalles mit der Stirnkante des Filterbahnmaterials aufgeschmolzen, wobei die Verbindung zu dem Filterbahnmaterial allein von diesem aufgeschmolzenen Material nach dessen Erkaltung gebildet wird. Der Nachteil einer solchen Ausführung besteht darin, daß weiches Filterbahnmaterial in der Regel nicht in definierter Weise in das aufgeschmolzene Schichtmaterial der Abdeckung eingeführt werden kann.

Hiervon ausgehend beschäftigt sich die Erfindung mit dem Problem, insbesondere den zuletzt genannten Nachteil zu vermeiden und eine Verbindung zwischen dem platten- oder streifenförmigen Dichtmaterial einerseits und dem Filterbahnmaterial andererseits zu schaffen, die ohne Verformung des Filterbahnmaterials einfach, kostengünstig und sicher herstellbar ist.

Diese Problematik ist auf folgendem Hintergrund zu sehen.

Bei sternförmig gefalteten Filterbahnmaterialien, bei denen das Filterelement in der Form einer zylindrischen oder kegelförmigen Patrone radial durchströmt wird, sind die Stirnkanten des Filterbahnmaterials fest mit Endscheiben, die Ringscheiben sein können, verbunden.

Bei Plattenfiltern, bei denen das Filterelement quer zur Plattenebene durchströmt wird, sind zumindest die Stirnkanten zu dichten und das gesamte Plattenfilter mit einer Art Rahmen zur Aufnahme in einem Träger- bzw. Filtergehäuse auszurüsten. Lediglich die Stirnkanten sind zu dichten, wenn das Filterelement ein ringförmiges Plattenfilter ist. In diesem Fall sind dann zusätzlich nur noch die beiden Enden der aneinanderstoßenden Falten dicht miteinander zu verbinden.

Liegt dagegen ein eckiger Plattenfilter vor, so ist an den beiden Seiten, an denen die Filterbahn endet, ebenfalls für eine Dichtung zu sorgen, mit der das Filterelement in diesem Bereich dicht in einen Träger eingelegt werden kann.

Eine grundsätzliche Lösung des erfindungsgemäßen Problems zeigt ein Filterelement mit dem kennzeichnenden Merkmal des Anspruchs 1 auf.

Zweckmäßige Ausgestaltungen der Erfindung sowie Verfahren zur Herstellung solcher Filterelemente sind Gegenstand der abhängigen Ansprüche.

Mit dem Verfahren nach Anspruch 9 lassen sich ausgehend von einfachen Ausgangsformen des Filterbahnmaterials, insbesondere eines an den Längskanten gerade verlaufenden Bandmaterials, Filterelemente mit verschiedenartig geformten Randeinfassungen auf recht unkomplizierte Weise herstellen.

Mit der Erfindung erzielbare Vorteile sowie eine nähere Erläuterung der Gegenstände der abhängigen Ansprüche lassen sich der nachfolgenden Beschreibung verschiedener Ausführungsbeispiele entnehmen.

Ein Vorteil der Erfindung soll insbesondere darin bestehen, daß die erfindungsgemäß erzielbare Randdichtung auf einfache Weise mit einer elastischen Dichtung zur Aufnahme des Filterelementes in einem Trägerteil verbindbar ist. Ferner ermöglicht die Erfindung bei einfacher Herstellung und Konstruktion bei Plattenfiltern die Erzielung eines steifen Dichtrahmens.

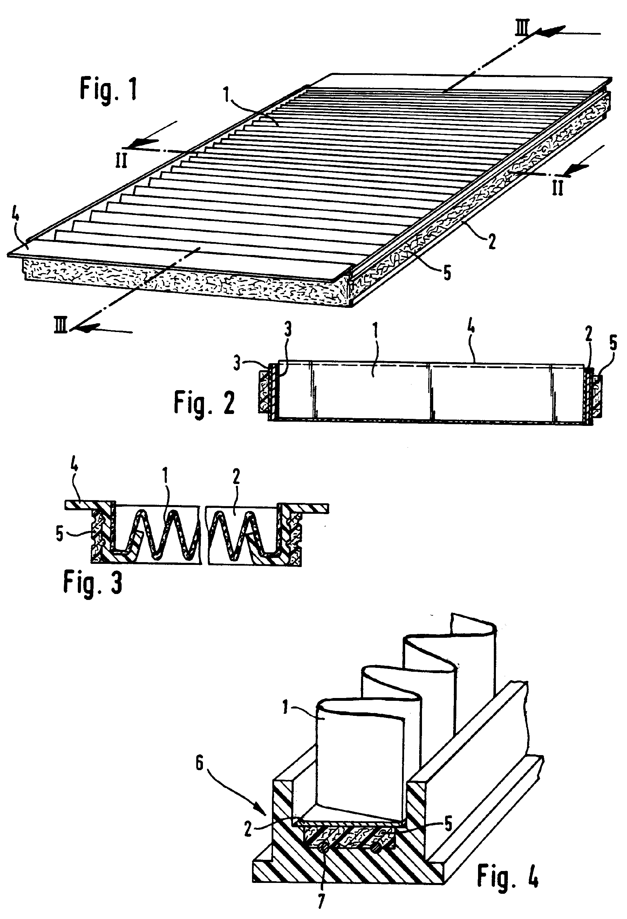

Einzelne dieser Ausführungsbeispiele sind in der Zeichnung dargestellt. Es zeigen
- Fig. 1: eine perspektivische Ansicht eines eckigen Plattenfilters,
- Fig. 2: einen Schnitt durch das Plattenfilter nach Linie II - II
- Fig. 3: einen Schnitt durch das Plattenfilter nach Linie III - III
- Fig. 4: eine Induktions-Heizvorrichtung im Schnitt in perspektivischer Darstellung als Ausschnitt
- Fig. 5: eine Ultraschweißeinrichtung mit eingelegtem Filterelement im Schnitt
- Fig. 6: Filterelement mit kreisringförmigem Querschnitt und zwischen parallelen Konusflächen verlaufenden Faltenkanten teils im Schnitt, teils in Ansicht
- Fig. 7: Plattenfilter mit sich außen verjüngender Rahmenkante im Schnitt nach VII - VII in Fig. 1 als alternative Ausführung des Filterelementes nach Fig. 1

Das Plattenfilter besteht aus einer an den Rändern dicht gefaßten gefalteten Bahn eines Kunststoffvlieses 1. Das Material ist ein Thermoplast.

Die Stirnkanten der einzelnen Falten des Bahnmaterials sind fest mit einem Aluminiumstreifen 2 verbunden. Die feste Verbindung ist dadurch erzielt, daß die Randzone der Stirnkanten der Falten aufgeschmolzen und mit dem Aluminiumstreifen eine feste Verbindung eingegangen ist. Um die Verbindung zu dem Aluminiummetallstreifen 2 zu verbessern, ist der Streifen 2 üblicherweise mit einem Kunststoffhaftvermittler beschichtet, der bei der Erzeugung der Verbindung mit aufgeschmolzen wird. Diese Schicht auf dem Aluminiumstreifen 2 ist in der Zeichnung mit 3 bezeichnet.

Während an den Stirnseiten der Filterfalten bereits ein dünner Aluminiumstreifen 2 im Verbund mit den daran angebundenen Falten des Filterbahnmaterials für eine ausreichende Rahmensteifigkeit sorgt, ist dies an den Querseiten des Plattenfilters nicht der Fall. Denn hier kann sich ein dünner Metallstreifen zumindest in Plattenebene leicht durchbiegen und besitzt auch im übrigen keine Torsionssteifigkeit. Deshalb empfiehlt es sich, an den Querseiten einen torsions- und biegesteifen Steg 4 aus einem Thermoplasten einzusetzen. Ein Thermoplast soll es deshalb sein, um diesen Steg sowohl mit den Aluminiumstreifen 2 an den Stirnseiten als auch mit dem Kunststoffvlies 1 selbst über ein Aufschmelzen bzw. Verschmelzen zu verbinden.

Umlaufend ist um den Plattenfilter in der Plattenebene ein elastisches Zusatz-Dichtmaterial 5 aufgebracht, das ein Kunststoffvlies ist. Die Aufbringung erfolgt wiederum durch ein Aufschmelzen der Berührungszone des Zusatzdichtmaterials 5, wobei die Aluminiumstreifen 2 auch an dieser Berührungsfläche mit einer Kunststoffschicht 3 als Haftvermittler versehen sind.

Die Verbindung der Metallstreifen mit dem Kunststoffvlies 1 und dem Zusatzdichtmaterial 5 einerseits und die Verbindung der Querstege 4 mit dem Kunststoffvlies 1 und dem Zusatzdichtmaterial 5 andererseits erfolgt jeweils wie folgt.

Eine Induktionsheizeinrichtung 6 sorgt dafür, daß der Aluminiumstreifen 2 gleichzeitig mit dem Kunststoffvlies 1 und dem Zusatzdichtmaterial 5 verbunden werden kann.

Zu diesem Zweck ist die Induktionsheizeinrichtung 6 in der Form einer U-förmigen Aufnahmevorrichtung ausgebildet. In der Basis dieser Form befindet sich eine elektrische Induktionsspule 7. Auf diese wird das Zusatzdichtmaterial 5 aufgelegt, das oben mit einem Aluminiumstreifen 2 abgedeckt wird. Auf dem Aluminiumstreifen wird sodann das Filterbahnmaterial mit seinen Stirnkanten aufgelegt. Ist die Induktionsheizeinrichtung derart befüllt, wird die Induktionsspule elektrisch aktiviert mit der Folge, daß der Aluminiumstreifen 2 derart erhitzt wird, daß die angrenzenden Zonen des Zusatzdichtmaterials 5 und des Kunststoffvlieses 1 gleichzeitig aufschmelzen. Aufgeschmolzen wird dabei gleichzeitig der sich auf beiden Seiten des Aluminiumstreifens 2 in Form von Kunststoffschichten 3 sich befindliche Haftvermittler. Nach Inaktivieren der Induktionsspule ist der Aluminiumstreifen 2 fest über Anschmelzschichten mit dem Kunststoffvlies 1 und dem Zusatzdichtmaterial 5 verbunden.

Bei den Querstegen 4 erfolgt die Verbindung zwischen dem Stegmaterial und dem Kunststoffvlies 1 sowie dem Zusatzdichtmaterial 5 ebenfalls gleichzeitig und zwar hier durch eine Hochfrequenzschweißung (Ultraschall).

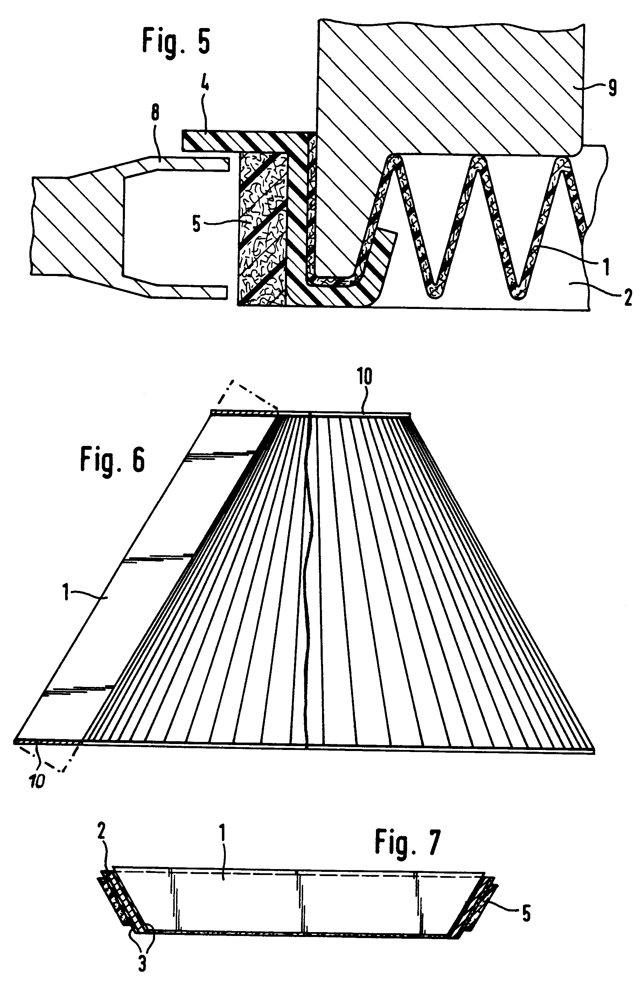

Wie eine solche Ultraschall-Schweißeinrichtung hier konkret aussieht, zeigt die Figur 5. Sie besteht im wesentlichen aus einer Sonotrode 8 und einem Amboß 9. An dem Amboß 9 liegt die letzte Falte des Kunststoffvlieses 1 an. Dabei wird das freie Ende dieser Falte von dem Amboß 9 gegen den Quersteg 4 gedrückt. Der Quersteg 4 ist aus thermoplastischem Material. An der nach außen weisenden Seite des Quersteges 4 liegt das Zusatzdichtmaterial 5 an. Die Sonotrode ist an ihrem auf das Zusatzdichtmaterial 5 aufzusetzenden Ende U-förmig ausgebildet. Durch die U-förmige Ausbildung wird das Zusatzdichtmaterial 5 nur linienförmig mit dem Quersteg 4 verbunden.

Die Verbindung des Quersteges 4 mit den Aluminiumstreifen 2 erfolgt durch ein Aufschmelzen der Stirnkanten des Quersteges 4 unterhalb der Aluminiumstreifen und zwar zu dem Zeitpunkt, in dem die Aluminiumstreifen in der Induktionsheizeinrichtung 7 erhitzt werden, d.h. gleichzeitig mit der Verbindung zwischen dem Aluminiumstreifen und dem Kunststoffvlies 1 sowie dem Zusatzdichtmaterial 5.

Wenn das Zusatzdichtmaterial 5 ein Kunststoffvlies ist, kann es für die spätere Montage des Filterelementes in einem Halterahmen zweckmäßig sein, das Vlies an der Längskante, an der es bei der Montage des Filterelementes zuerst in den Halterahmen eingebracht wird, durch Verschmelzen zu verdichten. Dieses Verschmelzen einer Längskante kann bereits bei der Herstellung des Zusatzdichtmaterials 5 erfolgen, d.h. bevor dieses Vlies zur Herstellung des Filterelementes verwendet wird. Insbesondere an den Querstegen kann dies jedoch durch eine entsprechende Form der Sonotrode auch erst bei der Anbindung des Zusatzdichtmaterials 5 an den Quersteg 4 erfolgen.

Bei der Filterpatrone nach Fig. 6 ist das Filterbahnmaterial mit seinen eingeformten Falten zu einem radial durchströmbaren Ring zusammengefaltet. Der Querschnitt dieses Ringes ist ein Parallelogramm, bei dem die Stirnkanten des Filterbahnmaterials jeweils in einer senkrecht zur Ringachse verlaufenden Ebene liegen. In diesen beiden Ebenen sind die Stirnkanten jeweils durch eine Ringscheibe 10 aus Metall gedichtet. Die Metallringscheiben 10 sind auf ihren den Stirnkanten der Filterbahnmaterialfalten angrenzenden Seiten wiederum kunststoffbeschichtet.

Die strichpunktiert gezeichneten Dreiecke im Bereich der Stirnkanten der Filterpatrone nach Fig. 6 deuten an, wie das Filterbahnmaterial 1, das aus Bandmaterial mit parallelen Längskanten hergestellt ist, vor dem erfindungsgemäßen Aufbringen der Ringscheiben 10 zu liegen kommt. Durch ein Aufbringen der Ringscheiben 10 unter Wärme auf das Filterbahnmaterial werden die zunächst dreieckförmig überstehenden Filterbahnmaterialbereiche auf einfache Weise abgeschmolzen. Auf diese Weise läßt sich eine Filterpatrone mit zwischen parallelen Konusflächen verlaufenden Faltenkanten erzeugen.

Bei dem plattenförmigen Filter nach Fig. 7 lassen sich auf entsprechende Weise die Rahmenaußenkanten in sich von einer Plattenseite zur anderen verjüngender Form auf die Stirnkanten des Filterbahnmaterials aufbringen, wobei bei dem Filterbahnmaterial wiederum vom Bandmaterial mit parallelen Längsseiten ausgegangen werden kann.

## Patentansprüche

1. Filterelement aus einem zick-zack-förmig gefalteten ring- oder plattenförmig angeordneten Filterbahnmaterial (1) aus schmelzbarem Kunststoff mit einem zumindest die Stirnseiten der Falten abdeckenden platten- oder streifenförmigen Dichtmaterial (2),
**dadurch gekennzeichnet**,
daß das Dichtmaterial (2) ein gut wärmeleitendes Metall ist, auf das ein Kunststoff-Haftvermittler (Haftprimer) aufgebracht ist, und daß dieses Metall über den aufgebrachten Kunststoff-Haftvermittler und eine aus dem angrenzenden Filterbahnmaterial (1) aufgeschmolzene Zone mit diesem Filterbahnmaterial (1) verbunden ist.

2. Filterelement nach Anspruch 1,
**dadurch gekennzeichnet**,
daß das Metall (2) Aluminium ist.

3. Filterelement nach Anspruch 1 oder 2,
**dadurch gekennzeichnet**,
daß das Filterbahnmaterial (1) ein Kunststoffvlies ist.

4. Filterelement nach einem der Ansprüche 1 bis 3,
**dadurch gekennzeichnet**,
daß es die Form einer ebenen oder gewölbten Platte hat und das Dichtmaterial (2, 4) die Falten des Filterbahnmaterials (1) in Form eines Rahmens einfaßt, wobei der die Stirnkanten der Falten abdichtende Teil des Rahmens streifenförmig ist.

5. Filterelement nach Anspruch 4,
**dadurch gekennzeichnet**,
daß die parallel zu den Falten verlaufenden Rahmenquerstege (4) des Dichtmaterials aus schmelzbarem Kunststoff sind, die mit den angrenzenden stirnseitigen Dichtmaterial-Rahmenteilen (2) durch eine Aufschmelzzone verbunden sind.

6. Filterelement nach Anspruch 5,
**dadurch gekennzeichnet**,
daß die Rahmenquerstege (4) ein relativ torsions- und biegesteifes Querschnittsprofil besitzen.

7. Filterelement nach einem der vorhergehenden Ansprüche,
**dadurch gekennzeichnet**,
daß das Dichtmaterial (2) zur dichten Aufnahme des Filterelementes in einem Trägerteil bzw. in einem Filtergehäuse mit einem elastischen zur Anlage an dem Trägerteil bzw. dem Filtergehäuse bestimmten Zusatzdichtmaterial (5) aus schmelzbarem Kunststoff über eine hieran aufgeschmolzene Randzone verbunden ist.

8. Filterelement nach Anspruch 7,
**dadurch gekennzeichnet**,
daß auf das Dichtmaterial (2) beidseitig ein Kunststoff-Haftvermittler aufgebracht ist.

9. Verfahren zur Herstellung eines Filterelementes nach einem der vorhergehenden Ansprüche,
**dadurch gekennzeichnet**,
daß das Dichtmaterial (2) und das Filterbahnmaterial (1) an den Flächen, an denen diese beiden Materialien beim fertigen Filterelement flächenschlüssig dicht aneinander liegen, zu Beginn des Zusammenfügens des Filterelementes bei noch nicht aufgeschmolzenem Filterbahnmaterial (1) nur in Teilbereichen Kontakt haben und daß der dichte Flächenschluß erst durch das Auf- und damit verbundene Abschmelzen des Filterbahnmaterials (1) erfolgt.

10. Verfahren zur Herstellung eines Filterelementes nach einem der vorhergehenden Ansprüche, insbesondere durch ein Verfahren nach Anspruch 9,
**dadurch gekennzeichnet**,
daß das Metall (2) in Form von vorliegendem Dichtmaterial bei auf dem Filtermaterial aufliegender Position induktiv zum Aufschmelzen des Filterbahnmaterials (1) erwärmt wird.

11. Verfahren nach Anspruch 9 oder 10 zur Herstellung eines kreisringförmigen Filterelementes mit radial verlaufenden Zick-Zack-Falten und einem in den Radialebenen des Filterelementes (Schnittflächen längs der Ringachse) trapezförmigen Querschnitt des Kreisringes, bei dem die Faltenkanten auf zur Ringachse geneigten Mantellinien und die Stirnkanten auf im wesentlichen senkrecht zur Kreisringachse verlaufenden Flächen liegen,
**dadurch gekennzeichnet**,
daß als Filterbahnmaterial (1) ein Bandmaterial mit parallelen Längsseiten und eingeformten Falten eingesetzt wird, das in die im Oberbegriff definierte Form gebracht wird und daß danach die an den axialen Enden jeweils über die senkrecht zur Kreisringachse verlaufenden Ebenen hinausragenden Filterbahnmaterialecken beim Auftragen des als im wesentlichen flache Scheibe ausgebildeten Metalls (2) abgeschmolzen werden.

12. Verfahren nach Anspruch 9 oder 10 zur Herstellung eines plattenförmigen Filters mit einem auf die Stirnkanten des Filterbahnmaterials gebrachten Rahmen aus Dichtmaterial, bei dem sich die senkrecht zur Plattenebene verlaufenden Rahmenkanten zu einer Seite der Plattenseite hin verjüngen,
**dadurch gekennzeichnet**,
daß als Filterbahnmaterial (1) ein Bandmaterial mit parallelen Längsseiten und eingeformten Falten eingesetzt wird, und daß die dann in der Form des Filterelementes senkrecht zur Plattenebene verlaufenden Faltenstirnkanten beim Aufbringen des Metalls (2) abgeschmolzen werden.

13. Verfahren nach einem der Ansprüche 9 - 11,
**dadurch gekennzeichnet**,
daß eine Induktionsheizeinrichtung (7) mit Abstand gegenüber dem aufzuwärmenden Metall (2) angeordnet ist.

14. Verfahren nach einem der vorhergehenden Verfahrensansprüche,
**dadurch gekennzeichnet**,
daß die Verbindung des Metalls (2) mit dem Filterbahnmaterial (1) einerseits und dem elastischen Zusatzdichtmaterial (5) andererseits gleichzeitig erfolgt.

15. Verfahren nach Anspruch 14,
**dadurch gekennzeichnet**,
daß die gleichzeitige Verbindung durch Hochfrequenzschweißung (Ultraschallschweißung) erfolgt.

## Claims

1. Filter element of a zigzag folded filter sheet material (1), arranged as a ring or plate, of fusible plastics material having a plate-shaped or strip-shaped sealing material (2) covering at least the edge faces of the folds, characterized in that the sealing material (2) is a metal having good thermal conductivity, onto which a plastics bond promoting agent (bonding primer) is applied, and that this metal is bonded to this filter sheet material (1) by the applied plastics bond promoting agent and a melted zone of the adjacent filter sheet material (1).

2. Filter element according to Claim 1, characterized in that the metal (2) is aluminium.

3. Filter element according to Claim 1 or 2, characterized in that the filter sheet material (1) is a plastics non-woven.

4. Filter element according to one of Claims 1 to 3, characterized in that it has the form of a plane or curved plate and the sealing material (2, 4) encloses the folds of the filter sheet material (1) in the form of a frame, the part of the frame sealing the edge faces of the folds being strip-shaped.

5. Filter element according to Claim 4, characterized in that the frame transverse members (4) of the sealing material running parallel to the folds are of fusible plastics, which are bonded to the adjacent end frame parts (2) of the sealing material by a fused zone.

6. Filter element according to Claim 5, characterized in that the frame transverse members (4) have a cross-sectional profile that is relatively stiff in torsion and bending.

7. Filter element according to one of the preceding Claims, characterized in that the sealing material (2), for the sealed seating of the filter element in a support component or in a filter casing, is connected to an elastic additional sealing material (5) of fusible plastics, intended for bearing against the support component or filter casing, by an edge zone fused thereon.

8. Filter element according to Claim 7, characterized in that a plastics bond promoting agent is applied onto both sides of the sealing material (2).

9. Method of making a filter element according to one of the preceding Claims, characterized in that the sealing material (2) and the filter sheet material (1), at those surfaces at which these two materials will bear sealingly with their faces against each other in the finished filter element, at the start of the joining together of the filter element when the filter sheet material (1) is not yet melted, have contact only in partial zones, and that the tight surface closure is only obtained by the melting and associated fusing of the filter sheet material (1).

10. Method of making a filter element according to one of the preceding Claims, especially by a method according to Claim 9, characterized in that the metal (2) in the form of sealing material is inductively heated when in position bearing against the filter material to melt the filter sheet material (1).

11. Method according to Claim 9 or 10 for the production of an annular filter element having radial zigzag folds and a trapezium-shaped cross-section of the annulus in the radial planes of the filter element (intersection surfaces along the ring axis), in which the fold edges lie along generatrices inclined to the axis of the ring and the end faces lie along surfaces basically perpendicular to the axis of the ring, characterized in that, as filter sheet material (1), a band material having parallel longitudinal sides and shaped folds is used, which is brought into the form defined in the preamble, and that thereafter the corners of the filter sheet material projecting at each of the axial ends beyond the planes extending perpendicularly to the axis of the ring, when the metal (2) formed basically as a flat disc is applied, are melted away.

12. Method according to Claim 9 or 10 for the production of a plate-shaped filter having a frame of sealing material applied onto the end faces of the filter sheet material, in which the frame edges extending perpendicularly to the plane of the plate converge towards one edge of the side of the plate, characterized in that, as filter sheet material (1), a band material having parallel longitudinal sides and shaped folds is used, and that the fold edges which then run in the form of the filter element perpendicularly to the plane of the plate are melted away when the metal (2) is applied.

13. Method according to one of Claims 9 to 11, characterized in that an induction heating device (7) is disposed at a distance from the metal (2) to be heated.

14. Method according to one of the preceding method Claims, characterized in that the connecting of the metal (2) to the filter sheet material (1) on the one hand and to the elastic additional sealing material (5) on the other hand takes place simultaneously.

15. Method according to Claim 14, characterized in that the simultaneous connecting is carried out by high-frequency welding (ultrasonic welding).

## Revendications

1. Elément filtrant, composé d'un matériau en bande (1) en matière plastique fusible, plié en zigzag et disposé en forme d'anneau ou de plaque, avec un matériau d'étanchéité (2) en forme de plaque ou de ruban, qui recouvre les côtés frontaux des plis, du moins, caractérisé en ce que le matériau d'étanchéité (2) est un métal d'une bonne conductivité thermique, sur lequel est appliqué un agent adhésif (promoteur d'adhérence) de matière plastique, et en ce que ce métal est assemblé, par l'intermédiaire de l'agent adhésif de matière plastique appliqué et d'une zone fondue du matériau filtrant (1) limitrophe, avec ce matériau filtrant en bande (1).

2. Elément filtrant suivant la revendication 1, caractérisé en ce que le métal (2) est de l'aluminium.

3. Elément filtrant suivant l'une des revendications 1 et 2, caractérisé en ce que le matériau filtrant en bande (1) est un voile de matière plastique.

4. Elément filtrant suivant l'une quelconque des revendications 1 à 3, caractérisé en ce qu'il a la forme d'une plaque plane ou cintrée, et en ce que le matériau d'étanchéité (2, 4) entoure les plis du matériau filtrant (1) en forme d'un cadre, la partie du cadre, assurant l'étanchéité des plis, étant en forme de ruban.

5. Elément filtrant suivant la revendication 4, caractérisé en ce que les profils transversaux (4) du cadre du matériau d'étanchéité, parallèles aux plis, se composent d'une matière plastique fusible, et sont assemblés par une zone de fusion avec les parties de cadre (2) du matériau d'étanchéité, limitrophes côté frontal.

6. Elément filtrant suivant la revendication 5, caractérisé en ce que les profils transversaux (4) du cadre présentent un profil en coupe transversal relativement résistant à la torsion et à la flexion.

7. Elément filtrant suivant l'une quelconque des revendications précédentes, caractérisé en ce que le matériau d'étanchéité (2), pour le logement étanche de l'élément filtrant dans une partie-support et/ou un boîtier de filtre, est assemblé avec un matériau d'étanchéité additionnel (5) élastique, en matière plastique fusible, destiné au contact sur la partie-support et/ou le boîtier de filtre, par l'intermédiaire d'une zone de bordure fondue sur ce matériau.

8. Elément filtrant suivant la revendication 7, caractérisé en ce qu'un agent adhésif de matière plastique est appliqué de part et d'autre sur le matériau d'étanchéité (2).

9. Procédé de fabrication d'un élément filtrant suivant l'une quelconque des revendications précédentes, caractérisé en ce que le matériau d'étanchéité (2) et le matériau filtrant (1), au début de l'assemblage de l'élément filtrant, lorsque le matériau filtrant (1) n'est pas encore fondu, n'ont qu'un contact dans des zones partielles sur les surfaces, sur lesquelles ces deux matériaux s'appliquent l'un sur l'autre de manière étanche, à l'état de finition de l'élément filtrant, et en ce que le contact superficiel étanche n'est assuré que par la fusion du matériau filtrant (1), c'est-à-dire le scellage consécutif de ce dernier.

10. Procédé de fabrication d'un élément filtrant suivant l'une quelconque des revendications précédentes, procédé suivant la revendication 9, notamment, caractérisé en ce que le métal (2), en forme du matériau d'étanchéité disponible, est chauffé par induction, en position d'appui sur le matériau filtrant, pour la fusion du matériau filtrant en bande (1).

11. Procédé suivant l'une des revendications 9 et 10 pour la fabrication d'un élément filtrant en forme d'anneau de cercle, avec des plis en zigzag situés dans le sens radial et une section transversale trapézoïdale de l'anneau de cercle dans les plans radiaux de l'élément filtrant (plans de section le long de l'axe de l'anneau), sur lequel les bords de pliage se situent sur des lignes d'enveloppe, inclinées par rapport à l'axe de l'anneau, et les bords frontaux sur des surfaces essentiellement perpendiculaires à l'axe de l'anneau de cercle, caractérisé en ce que le matériau filtrant (1) utilisé est un matériau en bande avec des côtés longitudinaux parallèles et des plis conformés, amené dans la forme définie dans le préambule, et en ce que les coins du matériau filtrant dépassant, sur les extrémités axiales, des plans perpendiculaires à l'axe de l'anneau de cercle, sont ensuite scellés lors de l'application du métal (2), réalisé sous forme de rondelle essentiellement plate.

12. Procédé suivant l'une des revendications 9 et 10 pour la fabrication d'un filtre en forme de plaque, avec un cadre en matériau d'étanchéité placé sur les bords frontaux du matériau filtrant, sur lequel les bords du cadre, perpendiculaires au plan de la plaque, se rétrécissent en direction d'un côté de la plaque, caractérisé en ce que le matériau filtrant (1) utilisé est un matériau en bande avec des côtés longitudinaux parallèles et des plis conformés, et en ce que les bords frontaux des plis, situés ensuite à la perpendiculaire du plan de la plaque dans la forme de l'élément filtrant, sont scellés lors de l'application du métal (2).

13. Procédé suivant l'une quelconque des revendications 9 à 11, caractérisé en ce qu'un dispositif de chauffage par induction (7) est disposé à distance par rapport au métal (2) à échauffer.

14. Procédé suivant l'une quelconque des revendications de procédé précédentes, caractérisé en ce que l'assemblage du métal (2) avec le matériau filtrant (1), d'une part, le matériau d'étanchéité additionnel (5), d'autre part, est assuré simultanément.

15. Procédé suivant la revendication 14, caractérisé en ce que l'assemblage simultané est assuré par soudage à haute fréquence (soudage par ultrasons).
